# EUROPEAN PATENT SPECIFICATION

(11) **EP 1 373 773 B1**
(45) Date of publication and mention of the grant of the patent: **05.07.2006**
(21) Application number: 02723622.3
(22) Date of filing: 27.03.2002
(51) Int. Cl.: F16L 3/13, F16L 3/22

(54) **Vibration-proof clamp**
Vibrationsbeständige Rohrschelle
Collier de fixation résistant aux vibrations

(30) Priority: 28.03.2001 JP 2001092898
(43) Date of publication of application: 02.01.2004
(73) Proprietor: Newfrey LLC, Newark, Delaware 19711 (US)
(72) Inventor: SHIBUYA, Tomio, c/o Pop Rivet Fastener K.K., Toyohashi-shi, Aichi-ken (JP)
(74) Representative: Haar, Lucas Heinz Jörn
(86) International application number: PCT/US2002/009332
(87) International publication number: WO 2002/079682

(56) References cited:
- EP-A- 1 013 978
- WO-A-94/16260
- GB-A- 2 200 426
- US-A- 4 566 660
- US-A- 4 881 705

## Description

### FIELD OF THE INVENTION

The present invention relates to a vibration-proof clamp according to the preamble of claim 1. Such clamps are used for holding various types of tube bodies to fix them to an automobile body or the like.

### BACKGROUND OF THE INVENTION

Generally, a vibration-proof clamp is used for holding a fuel or brake-fluid tubing of an automobile or the like to fix it an automobile body or the like with insulating vibrations generated in the tubing so as to prevent the vibrations from being transmitted to the body.

A vibration-proof clamp of the type referred to above is known from GB-A-2200426. This clamp comprises an anti-vibration insert which has a plurality of supporting regions extending therethrough, each one for supportingly engaging an elongate member. The anti-vibration insert is inserted in a rectangular space of an U-shaped housing which is closed by an upper part hingedly connected thereto at one end and connectable to the housing at the other end via a catch arrangement. In this known clamp the supporting regions are separated from each other by deformable supporting elements of the anti-vibration insert. Thus, all supporting regions will have to accommodate an elongate member of adequate size in order to achieve sufficient support.

It is also known from WO 94/16260 A a support for elasticly securing pipes according to the preamble of claim 1 comprising an elastic holder clamping the pipe in a through aperture and having a slot running radially outwards from this aperture and being capable of lapping over the pipes, and comprising a securing system having two separate securing components at least partly surrounding the elastic holder and having at least two securing points for securing the holder to a point of application.

Also EP-A-1013978 discloses a vibration-proof clamp similar to the subject-matter of claim 1.

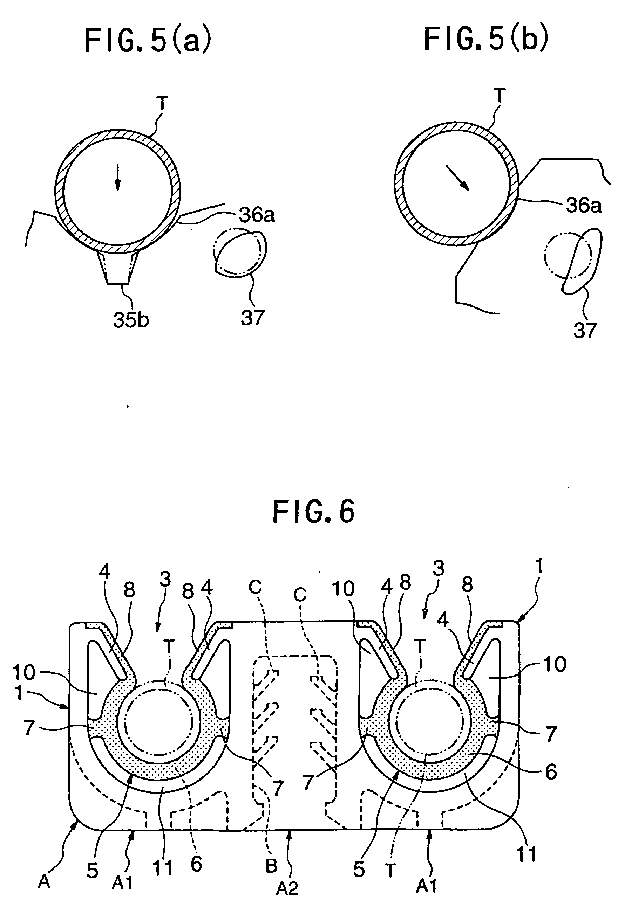

Fig. 6 shows a side view of one example of a conventional vibration-proof clamp. This conventional vibration-proof clamp has a plurality of clamp portions A1 and an attaching portion A2 adjacent to the clamp portions. The attaching portion A2 includes a plughole B and an engagement piece C, and allows a stud fixed to an automobile body (not shown) to be inserted thereinto. Each of the clamp portions A1 has a main body 1 formed of a hard resin material, and the main body has a pair of sidewalls and a bottom wall. An insertion opening 3 is defined between the opposed ends of the sidewalls of the main body 1 to allow a tube body T to be passed therethrough in an attaching or detaching operation of the tube body.

The main body 1 also includes a pair of anti-dropping pieces 4 each provided at the corresponding end of the sidewalls. When the tube body T is inserted into the main body 1 through the insertion opening 3, the anti-dropping pieces 4 are pressed and deformed by the tube body. After the tube body T is fitted into a holding body 6 of a vibration-proof member 5, the anti-dropping pieces 4 are returned to their original form. In this state, the anti-dropping pieces 4 act to prevent the tube body T from dropping off.

The vibration-proof member 5 formed of a soft resin material includes the holding body 6 for holding the tube body T fitted thereinto, a pair of coupling pieces 7 for coupling the holding body 6 to the inner surface of the main body 1, and a pair of covering elements 8 for covering a part of the outer surface of the anti-dropping pieces 4.

A cavity portion 10, 11 is formed between the main body 1 and the holding body 6 of the vibration-proof member 5. The cavity portion 10, 11 acts to assure the vibration-proof performance of the vibration-proof member 5.

This conventional vibration-proof clamp provides a high vibration-proof performance. The main body 1 and the holding body 6 are coupled by the covering elements 8 with a relatively large contact area. However, the holding body is coupled to the inner surface of the main body 1 only by the coupling pieces 7 or with a small contact area. Thus, if the soft resin material of the coupling pieces 7 is degraded, the coupling pieces 7 can be released from the main body 1, or can be damaged. In addition, the holding body 6 can be damaged in the vicinity of the lower end of the anti-dropping piece 4. Due to the disadvantageous damage as described above, the conventional vibration-proof clamp has suffered from degradation in reliability.

The present invention is directed to solve this problem. It is therefore an object of the present invention to provide a vibration-proof clamp capable of achieving high vibration-proof performance with high reliability.

### SUMMARY OF THE INVENTION

A vibration-proof clamp according to the present invention comprises a housing member having a pair of sidewalls, a top wall and a bottom wall forming a rectangular housing space; and
an elastic tubing-retaining member housed in said space of said housing member and adapted to hold a tube body, said tubing-retaining member including a plurality of inner tubing-retaining surfaces defining a space for receiving said tube body through an opening, channels provided between the adjacent tubing-retaining surfaces, and cavities formed within said tubing-retaining member, wherein
when said tube body is vibrated and displaced, said cavities and said channels are operable to absorb the displacement of said tube body so as to provide vibration-proof performance, characterised in that said housing member includes a plurality of spaced apart rectangular housing spaces separated by sidewalls and housing an elastic tubing-retaining member,
each rectangular housing space including a pair of top walls and a pair of inclined surfaces each extending from a corresponding top wall obliquely downward to define a tube body insertion opening between said inclined surfaces, said tube-body insertion opening being aligned with said opening of said tubing retaining member.

The tubing-retaining surfaces of the tubing-retaining member may be formed in flat surfaces. Alternatively, the tubing-retaining surfaces may be formed with concave portions conformable with the tube body.

The channels of the tubing-retaining member may be formed to extend in the longitudinal direction of the tube body. The cavities of the tubing-retaining member may be formed to extend in the longitudinal direction of the tube body.

The housing member may include an undercut portion for retaining the tubing-retaining member.

### BRIEF DESCRIPTION OF THE DRAWINGS

Fig. 1 is an end view of a vibration-proof clamp according to an embodiment of the invention.
Fig. 2 is a top view of the vibration-proof clamp according to the embodiment of the invention.
Fig. 3 is an end view of a housing member of the vibration-proof clamp according to the embodiment of the invention.
Fig. 4 and Fig 4 (a) is a sectional view taken along the line A-A of Fig. 3. Fig. 4 (b) illustrates the state when a tubing-retaining member is attached.
Fig. 5 is a schematic diagram showing the movement of the tubing-retaining member when a tube body is vibrated and displaced.
Fig. 6 is an end view of a conventional vibration-proof clamp.

### DETAILED DESCRIPTION OF THE PREFERRED EMBODIMENT

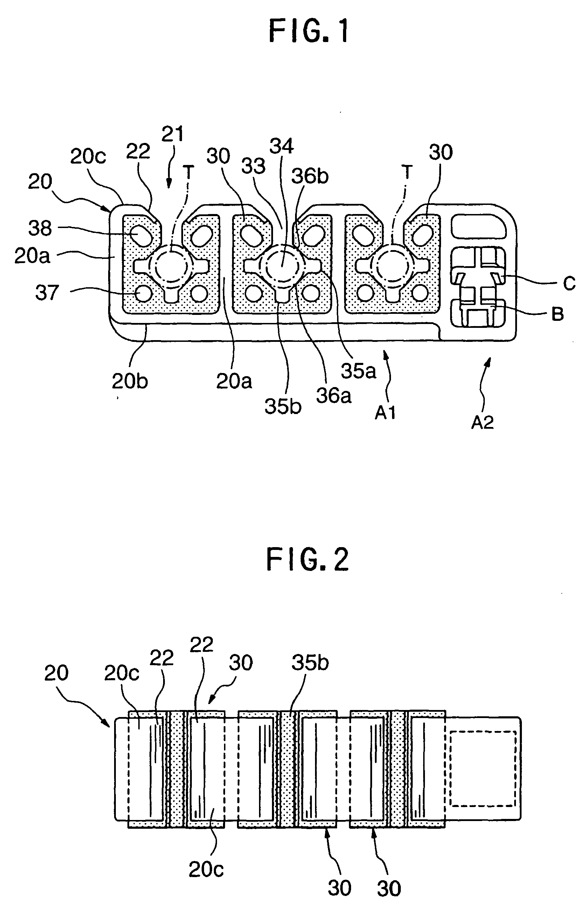

With reference to the drawings, embodiments of the present invention will now be described. Fig. 1 is an end view of a vibration-proof clamp according to a first embodiment of the invention. Fig. 2 is a top view of the vibration-proof clamp. The vibration-proof clamp includes a plurality of clamp portions A1 and an attaching portion A2 adjacent to the clamp portions. The attaching portion A2 includes a plughole B and an engagement piece C, and allows a stud fixed to an automobile body (not shown) to be inserted thereinto. Each of the clamp portions A1 includes a housing member 20 formed of a hard resin material, and a tubing-retaining member 30 for holding a tube body T fitted into the housing member 20.

In each of the clamp portions A1, the housing member 20 formed of a hard resin material has a bottom wall 20b, a pair of sidewalls 20a and a pair of top walls 20c. A rectangular housing space is defined by the bottom wall 20b, the pair of sidewalls 20a and the pair of top walls 20c.

The ends of the top walls 20c of the housing member 20 have a pair of inclined surfaces 22 extending obliquely downward, respectively. An insertion opening 21 is defined between the pair of inclined surfaces 22 of the housing member 20 to allow the tube body T to be passed therethrough in an attaching or detaching operation of the tube body. Each of the inclined surfaces 22 is formed to have a thickness less than the sidewalls 20a and the top walls 20c so as to be elastically deformed when the tube body T passes through the insertion opening 21.

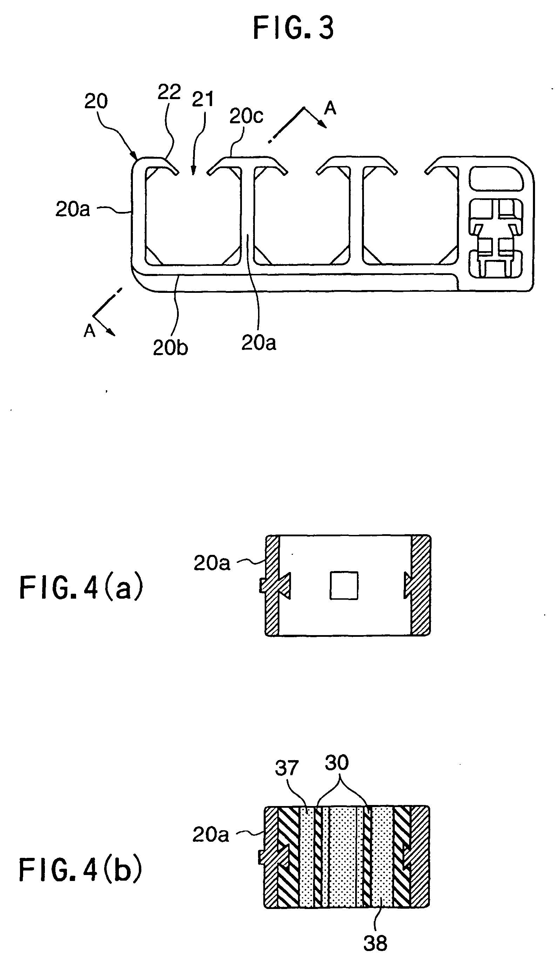

Fig. 3 illustrates the housing member 20 in the state before the tubing-retaining member 30 is attached thereto. Fig. 4(a) is a sectional view taken along the line A-A, wherein the housing member 20 is provided with an undercut portion for reliably retaining the tubing-retaining member 30 when the tubing-retaining member 30 is attached to the housing member later. Fig. 4(b) shows the state when the tubing-retaining member is attached to the housing member.

Returning to Fig. 1, the tubing-retaining member 30 is housed in the inner space of the housing member 20. The tubing-retaining member 30 is formed of an elastic soft resin material, and is in contact with the sidewalls 20a, the bottom wall 20b, the top walls 20c and the inclined surfaces 22. The tubing-retaining member 30 may be made by rubber. An opening 33 is provided in the upper portion of the tubing-retaining member 30 to allowing the tube body T to be passed therethrough in an insertion operation of the tube body. The opening 33 has a width shorter than the outside diameter of the tube body T to allow the tube body to be passed therethrough by a push-in operation but to prevent the tube body installed in place from being readily pulled out therethrough.

A bottom channel 35b is formed in the bottom surface of the tubing-retaining member 30, and a side channel 35a is formed in each of the side surfaces of the tubing-retaining member 30. A downward inclined surface 36a as a tubing-retaining surface is formed between the bottom channel 35b and each of the two side channels 35a. Further, an upward inclined surface 36b as a tubing-retaining surface is formed between the top opening 33 and each of the two side channels 35a. The center portion surrounded by 4 inclined surfaces 36a, b defines a space 34, and the tube body T can be installed in this cavity 34. The distance between each of two sets of the opposed inclined surfaces 36a and 36b is slightly smaller than the outside diameter of the tube body T to allow the tube body T installed in the cavity 34 to be held between the opposing inclined surfaces. The tube body T is held in the cavity 34 by these four inclined surfaces 36a, b.

While each of the inclined surfaces 36a, b in the aforementioned embodiments has been formed in a flat surface, each of the inclined surfaces 36a, b may be formed in a concave surface conformable with the tube body T.

Within the tubing-retaining member 30, an upper cavity 38 is formed between the opening 33 and each of the sidewalls 20a, and a lower cavity 37 is formed somewhere between the bottom channel 35b and each of the sidewalls 20a. The pair of cavities 37, 38 facilitate elastic deformation of the tubing-retaining member 30. When the tube body is fitted into the tubing-retaining member 30, the upper cavities 38 are mainly deformed to allow the tube body T to be received in the tubing-retaining member 30.

When the tube body T is vibrated and displaced, the channels 35a, b and the cavities 37, 38 are operable to absorb the vibration. More specifically, when the tube body T is displaced sideward, the corresponding side channel 35s can be mainly deformed to absorb the displacement. When the tube body T is displaced downward, the bottom channel 35 can be mainly deformed. Further, when the tube body T is displaced obliquely, the corresponding inclined surface 36a, b and the corresponding cavity 37, 38 can be deformed to absorb the displacement.

In this vibration-proof clamp, vibration-proof performance is enhanced by the channels 35a, b and cavities 37, 38 formed in the tubing-retaining member 30.

The operation of attaching tubing to a vibration-proof clamp will be described below.

When a tube body T is fitted into the tubing-retaining member 30, the inclined surfaces 22 are pressed and bendingly deformed by the tube body T. The opening 33 of the tubing-retaining member 30 is expanded by the tube body T, and the upper cavities 38 are pushed and deformed.

After the tube body T is fitted into the space 34 in the tubing-retaining member 30, the inclined surfaces 22 are deformed and returned to their original shapes, and the width of the opening 33 is returned to former state. Thus, the tube body T is retained by the four inclined surfaces 36a, b so as not to drop off.

Fig. 5 is a schematic diagram showing the movement of the tubing-retaining member 30 when the tube body T is vibrated and displaced. Fig. 5 (a) shows the movement of the tube body T when the tube body T is displaced downward. When the tube body T is displaced downward, the tube body T pushes the inclined surfaces 36a downward to increase the distance therebetween and expands the lower channel 35b, so as to absorb the displacement. When the tube body T is displaced sideward, the tube body T pushes the corresponding inclined surfaces 36a, b to increase the distance therebetween and expands the corresponding side channel 35a, so as to absorb the displacement. Fig. 5 (b) shows the movement of the tube body T when the tube body T is displaced obliquely downward. When the tube body T is displaced obliquely, the tube body T pushes the corresponding inclined surface 36a downward to deform the corresponding cavity 37, so as to absorb the displacement. Thus, even if the tube body T is vibrated and displaced in any direction, the vibration is absorbed by the channels 35a, b and the cavities 37, 38.

Thus, this vibration-proof clamp can provide enhanced vibration-proof performance by the channels 35a, b and cavities 37, 38 formed in the tubing-retaining member 30.

As described above, the present invention can provide a vibration-proof clamp capable of achieving high vibration-proof performance with high reliability.

## Claims

1. A vibration-proof clamp comprising:
a housing member (20) having a pair of sidewalls (20a), a top wall and a bottom wall (20b) forming a rectangular housing space; and
an elastic tubing-retaining member (30) housed in said space of said housing member (20) and adapted to hold a tube body (T), said tubing-retaining member (30) including a plurality of inner tubing-retaining surfaces (36a, 36b) defining a space (34) for receiving said tube body (T) through an opening (33), channels (35a, 35b) provided between the adjacent tubing-retaining surfaces (36a, 36b), and cavities (37, 38) formed within said tubing-retaining member (30), wherein
when said tube body (T) is vibrated and displaced, said cavities (37, 38) and said channels are operable to absorb the displacement of said tube body (T) so as to provide vibration-proof performance,
said housing member (20) includes a plurality of spaced apart rectangular housing spaces separated by sidewalls (20a) and housing an elastic tubing-retaining member (30), **characterised in that**
each rectangular housing space including a pair of top walls (20c) and a pair of inclined surfaces (22) each extending from a corresponding top wall obliquely downward to define a tube body insertion opening (21) between said inclined surfaces (22), said tube-body insertion opening (21) being aligned with said opening (33) of said tubing retaining member (30).

2. A vibration-proof clamp as described in claim 1, wherein said inclined surfaces (22) are adapted to biasedly deform when said tube (T) body passes through said tube body insertion opening (21).

3. A vibration-proof clamp as described in claim 1, wherein said tubing-retaining surfaces (36a, 36b) of said tubing-retaining member (30) are formed in a flat surface.

4. A vibration-proof clamp as described in claim 1, wherein said tubing-retaining surfaces (36a, 36b) are formed with a concave portion conformable with said tube body (T).

5. A vibration-proof clamp as described in claim 1, wherein said channels of said tubing-retaining member (30) is formed to extend in the longitudinal direction of said tube body (T).

6. A vibration-proof clamp as described in claim 1, wherein said cavities (37, 38) of said tubing-retaining member (30) are formed to extend in the longitudinal direction of said tube body (T).

7. A vibration-proof clamp as described in claim 1, wherein said housing member (20) includes an undercut portion for retaining said tubing-retaining member (30).

8. A vibration-proof clamp as described in claim 1, wherein said housing member (20) includes an attaching portion (A2) positioned adjacent to said rectangular housing space.

9. A vibration-proof clamp as described in claim 12, wherein said attaching portion (A2) includes a plug hole (B) and an engagement piece (C).

## Patentansprüche

1. Vibrationsbeständige Klemme umfassend:
ein Gehäuseglied (20) mit einem Paar Seitenwände (20a), einer oberen Wand und einer unteren Wand (20b), die einen rechteckigen Gehäuseraum bilden; und
ein in dem Raum des Gehäuseglieds (20) untergebrachtes elastisches Röhrenhalteglied (30), das dazu angepasst ist, einen Röhrenkörper (T) zu halten, wobei das Röhrenhalteglied (30) mehrere innere Röhrenhalteflächen (36a, 36b) umfasst, die einen Raum (34) zum Aufnehmen des Röhrenkörpers (T) durch eine Öffnung (33) definieren, wobei Kanäle (35a, 35b) zwischen den benachbarten Röhrenhalteflächen (36a, 36b) vorgesehen sind und Hohlräume (37, 38) in dem Röhrenhalteglied (30) gebildet sind, wobei
wenn der Röhrenkörper (T) vibriert und verschoben wird, die Hohlräume (37, 38) und die Kanäle wirksam sind, die Verschiebung des Röhrenkörpers (T) aufzunehmen, um ein vibrationsbeständiges Verhalten zu erreichen,
wobei das Gehäuseglied (20) mehrere in einem Abstand voneinander angeordnete, durch Seitenwände (20a) getrennte und ein elastisches Röhrenhalteglied (30) unterbringende rechteckige Gehäuseräume umfasst, **dadurch gekennzeichnet, dass**
jeder rechteckige Gehäuseraum ein Paar obere Wände (20c) und ein Paar geneigte Flächen (22) umfasst, die sich jeweils von einer entsprechenden oberen Wand schräg nach unten erstrecken, um eine Röhrenkörper-Einfügeöffnung (21) zwischen den geneigten Flächen (22) zu bilden, wobei die Röhrenkörper-Einfügeöffnung (21) mit der Öffnung (33) des Röhrenhalteglieds (30) fluchtet.

2. Vibrationsbeständige Klemme nach Anspruch 1, wobei die geneigten Flächen (22) dazu angepasst sind, sich unter Belastung zu verformen, wenn der Röhrenkörper (T) durch die Röhrenkörper-Einfügeöffnung (21) tritt.

3. Vibrationsbeständige Klemme nach Anspruch 1, wobei die Röhrenhalteflächen (36a, 36b) des Röhrenhalteglieds (30) in einer ebenen Fläche gebildet sind.

4. Vibrationsbeständige Klemme nach Anspruch 1, wobei die Röhrenhalteflächen (36a, 36b) mit einem mit dem Röhrenkörper (T) gleichförmigen konkaven Teil gebildet sind.

5. Vibrationsbeständige Klemme nach Anspruch 1, wobei die Kanäle des Röhrenhalteglieds (30) so geformt sind, dass sie sich in der Längsrichtung des Röhrenkörpers (T) erstrecken.

6. Vibrationsbeständige Klemme nach Anspruch 1, wobei die Hohlräume (37, 38) des Röhrenhalteglieds (30) so geformt sind, dass sie sich in der Längsrichtung des Röhrenkörpers (T) erstrecken.

7. Vibrationsbeständige Klemme nach Anspruch 1, wobei das Gehäuseglied (20) einen unterschnittenen Teil zum Halten des Röhrenhalteglieds (30) umfasst.

8. Vibrationsbeständige Klemme nach Anspruch 1, wobei das Gehäuseglied (20) einen angrenzend an den rechteckigen Gehäuseraum positionierten Befestigungsteil (A2) umfasst.

9. Vibrationsbeständige Klemme nach Anspruch 12, wobei der Befestigungsteil (A2) ein Steckloch (B) und ein Einraststück (C) umfasst.

## Revendications

1. Collier de fixation résistant aux vibrations comprenant :
un élément de logement (20) comportant une paire de parois latérales (20a), une paroi supérieure et une paroi de fond (20b) formant un espace de logement rectangulaire ; et
un élément élastique de retenue de tube (30) logé dans ledit espace dudit élément de logement (20) et destiné à maintenir un corps tubulaire (T), ledit élément de retenue de tube (30) incluant une pluralité de surfaces intérieures de retenue de tube (36a, 36b) définissant un espace (34) destiné à recevoir ledit corps tubulaire (T) par une ouverture (33), des canaux (35a, 35b) étant ménagés entre les surfaces adjacents de retenue de tube (36a, 36b), et des cavités (37, 38) étant ménagées à l'intérieur dudit élément de retenue de tube (30),
lorsque ledit corps tubulaire (T) est soumis à des vibrations et est déplacé, lesdites cavités (37, 38) et lesdits canaux étant aptes à absorber le déplacement dudit corps tubulaire (T) de manière à conférer des performances de résistance aux vibrations,
ledit élément de logement (1) incluant une pluralité d'espaces de logement rectangulaires espacés et séparés par des parois latérales (20a) et logeant un élément élastique de retenue de tube (30), **caractérisé en ce que**
chaque espace de logement rectangulaire incluant une paire de parois supérieurs (20c) et une paire de surfaces inclinées (22) s'étendant chacune depuis une paroi supérieure correspondante dirigée obliquement vers le bas afin de définir une ouverture d'insertion de corps tubulaire (21) entre lesdites surfaces inclinées (22), ladite ouverture d'insertion de corps tubulaire (21) étant alignée avec ladite ouverture (33) dudit élément de retenue de tube (30).

2. Collier de fixation résistant aux vibrations selon la revendication 1, dans lequel lesdites surfaces inclinées (22) sont destinées à se déformer lorsque le corps tubulaire (T) passe à travers ladite ouverture d'insertion de corps tubulaire (21).

3. Collier de fixation résistant aux vibrations selon la revendication 1, dans lequel lesdites surfaces de retenue de tube (36a, 36b) dudit élément de retenue de tube (30) sont formées dans une surface plate.

4. Collier de fixation résistant aux vibrations selon la revendication 1, dans lequel lesdites surface de retenue de tube (36a, 36b) sont formées d'une portion concave pouvant se conformer audit corps tubulaire (T).

5. Collier de fixation résistant aux vibrations selon la revendication 1, dans lequel lesdits canaux dudit élément de retenue de tube (30) sont formés de façon à s'étendre dans la direction longitudinale dudit corps tubulaire (T).

6. Collier de fixation résistant aux vibrations selon la revendication 1, dans lequel lesdites cavités (37, 38) dudit élément de retenue de tube (30) sont formées de façon à s'étendre dans la direction longitudinale dudit corps tubulaire (T).

7. Collier de fixation résistant aux vibrations selon la revendication 1, dans lequel ledit élément de logement (20) inclut une portion découpée destinée à retenir ledit élément de retenue de tube (30).

8. Collier de fixation résistant aux vibrations selon la revendication 1, dans lequel ledit élément de logement (20) inclut une portion de fixation (A2) placée près dudit espace de logement rectangulaire.

9. Collier de fixation résistant aux vibrations selon la revendication 12, dans lequel ladite portion de fixation (A2) inclut un trou de bouchon (B) et une pièce d'engagement (C).
